# EUROPÄISCHE PATENTSCHRIFT

(11) **EP 2 078 481 B1**
(45) Veröffentlichungstag und Bekanntmachung des Hinweises auf die Patenterteilung: **08.08.2012**
(21) Anmeldenummer: 09000217.1
(22) Anmeldetag: 09.01.2009
(51) Int. Cl.: A47J 31/60

(54) **Reinigungsmodul, Vorrichtung und Verfahren zur Reinigung für Maschinen zur Herstellung flüssiger Lebensmittel**
Cleaning module, device and method for cleaning machines for the production of fluid meals
Module de nettoyage, dispositif et procédé de nettoyage pour machines destinés à la fabrication d'aliments liquides

(30) Priorität: 10.01.2008 DE 102008003733
(43) Veröffentlichungstag der Anmeldung: 15.07.2009
(73) Patentinhaber: FRANKE Kaffeemaschinen AG, 4663 Aarburg (CH)
(72) Erfinder: Vetterli, Heinz, 8855 Wangen (CH); Ioannone, Matteo, 8162 Steinmaur (CH)
(74) Vertreter: Lemcke, Brommer & Partner

(56) Entgegenhaltungen:
- EP-A- 1 911 382
- US-A- 3 666 558
- US-A1- 2004 118 291

## Beschreibung

Die Erfindung betrifft ein Reinigungsmodul für Maschinen zur Herstellung flüssiger Lebensmittel, insbesondere für Kaffeemaschinen. Die Erfindung betrifft weiterhin eine Vorrichtung zur Herstellung von flüssigen Lebensmitteln, insbesondere von Kaffee und ein Verfahren zur Reinigung solch einer Vorrichtung.

Vorrichtungen zur Herstellung flüssiger Lebensmittel weisen typischerweise eine Förderpumpe und eine Förderleitung auf, so dass mittels der Förderpumpe über die Förderleitung ein flüssiges Lebensmittel oder ein Lebensmittelzusatz aus einem Behälter in die Vorrichtung befördert werden kann und dort weiterverarbeitet oder einem anderen flüssigen Lebensmittel zugemischt werden kann. Insbesondere bei Kaffeemaschinen ist es bekannt, Milch, Sirup oder andere Zusätze aus einem Behälter in die Kaffeemaschine zu fördern und gemeinsam oder sukzessive zu dem Kaffee an einem Auslauf auszugeben.

Solche Vorrichtungen müssen regelmäßig gereinigt werden, um die hygienischen Standards zu gewährleisten und Ablagerungen zu verhindern. Insbesondere bei der Verwendung solcher Vorrichtungen in Großbetrieben ist eine regelmäßige, meist tägliche Reinigung nach vorgegebenen Standards vorgeschrieben.

US 2004/0118291 A1 offenbart eine Vorrichtung zur Ausgabe flüssiger Lebensmittel mit einen Anschluss für einen Milchbehälter, einer Mischvorrichtung und einer Ausgabeöffnung zur Ausgabe des Milch-Mischprodukts. Die Mischvorrichtung ist darüber hinaus in einen Reinigungsflussweg eingebunden und kann somit bedarfsweise mit Spül- oder Desinfektionsmittel gereinigt werden.

Typischweise wird für die Reinigung der zuvor beschriebene Behälter entfernt und durch einen Behälter mit Reinigungsmittel ersetzt. Nach Starten eines Reinigungsprogramms fördert die Förderpumpe das Reinigungsmittel über die Förderleitung in die Maschine und reinigt vorgegebene Bestandteile der Maschine. Anschließend muss der Benutzer den Behälter mit Reinigungsmittel gegen einen Behälter mit Frischwasser austauschen, so dass in einem weiteren Schritt des Reinigungsprogramms die Vorrichtung gespült werden kann, um ein Rückbleiben von Reinigungsmittelresten in der Maschine zu verhindern.

Das zuvor beschriebene Reinigungsverfahren ist aufwendig, da es die Ausführung zwischengelagerter Verfahrensschritte durch den Benutzter erfordert. Darüber hinaus bestehen einige Fehlerquellen, beispielsweise ein Befüllen des Behälters mit einem falschen Reinigungsmittel, so dass die Gefahr einer unsachgemäßen Reinigung besteht.

Der Erfindung liegt daher die Aufgabe zugrunde, den Reinigungsvorgang für Vorrichtungen zur Herstellung flüssiger Lebensmittel zu verbessern, insbesondere für den Benutzer unaufwendiger zu gestalten und die Fehleranfälligkeit zu verringern.

Gelöst ist diese Aufgabe durch ein Reinigungsmodul für Maschinen zur Herstellung flüssiger Lebensmittel, insbesondere für Kaffeemaschinen gemäß Anspruch 1, durch eine Vorrichtung zur Herstellung von flüssigen Lebensmitteln, insbesondere von Kaffee, gemäß Anspruch 8 sowie durch ein Verfahren zur Reinigung einer Vorrichtung zur Herstellung von flüssigen Lebensmitteln, insbesondere von Kaffee, gemäß Anspruch 13.

Vorteilhafte Ausgestaltungen des Reinigungsmoduls finden sich in den Ansprüchen 2 bis 7, vorteilhafte Ausgestaltungen der Vorrichtung zur Herstellung von flüssigen Lebensmitteln finden sich in den Ansprüchen 9 bis 12 und vorteilhafte Ausgestaltungen des Verfahrens finden sich in den Ansprüchen 14 bis 16.

Die Erfindung betrifft somit zum Einen ein Reinigungsmodul für Maschinen zur Herstellung flüssiger Lebensmittel, insbesondere für Kaffeemaschinen.

Wie eingangs beschrieben ist es bisher bekannt, einen Behälter mit einem Reinigungsmittel beispielsweise über eine Förderleitung mit einer Vorrichtung zur Herstellung flüssiger Lebensmittel zu verbinden, so dass das Reinigungsmittel aus dem Behälter gefördert wird, zur Reinigung der Maschine.

Das erfindungsgemäße Reinigungsmodul umfasst hingegen mindestens einen Reinigungsmittelbehälter zur Aufnahme von Reinigungsmittel, mindestens eine Dosiervorrichtung mit einem Steueranschluss und mindestens eine Ausgabekammer. Die Dosiervorrichtung ist derart mit dem Reinigungsbehälter und der Ausgabekammer verbunden, dass Reinigungsmittel mittels der Dosiervorrichtung aus dem Reinigungsmittelbehälter in die Ausgabekammer förderbar ist.

Das erfindungsgemäße Reinigungsmodul kann somit von dem Benutzer als Ganzes vor dem Reinigungsvorgang neben oder in die Vorrichtung zur Herstellung flüssiger Lebensmittel eingestellt werden. Anschließend läuft ein vollautomatisches Reinigungsprogramm der Vorrichtung ab, bei dem die Dosiervorrichtung des Reinigungsmoduls über den Steueranschluss Steuersignale von der Vorrichtung zur Herstellung flüssiger Lebensmittel erhält und abhängig von diesen Steuersignalen Reinigungsmittel in die Ausgabekammer fördert. Die Ausgabekammer ist derart gestaltet, dass sie mit dem Flüssigkeitskreislauf der Vorrichtung zur Herstellung flüssiger Lebensmittel verbindbar ist.

Weiterhin bilden Reinigungsmittelbehälter, Dosiervorrichtung und Ausgabekammer eine bauliche Einheit.

Hierdurch kann das erfindungsgemäße Reinigungsmodul somit als bauliche Einheit von dem Benutzer als Ganzes vor dem Reinigungsvorgang neben oder in die Vorrichtung zur Herstellung flüssiger Lebensmittel eingestellt werden. Anschließend läuft wie beschrieben das vollautomatische Reinigungsprogramm der Vorrichtung ab, ohne dass ein Eingreifen von außen notwendig ist. Weiterhin weist die Ausgabekammer eine Öffnung an der Oberseite oder im oberen Bereich der Ausgabekammer auf, in welche eine Förderleitung der Vorrichtung zur Herstellung flüssiger Lebensmittel eingeführt werden kann.

Das erfindungsgemäße Reinigungsmodul weist somit den Vorteil auf, dass der Benutzer lediglich überprüfen muss, dass eine ausreichende Menge an Reinigungsmittel in dem Reinigungsbehälter vorhanden ist und das Reinigungsmodul an oder in der Vorrichtung zur Herstellung flüssiger Lebensmittel anordnen muss sowie die Ausgabekammer mit dem Flüssigkeitskreislauf der Vorrichtung zur Herstellung flüssiger Lebensmittel und den Steueranschluss mit einem entsprechenden Steueranschluss der Vorrichtung zur Herstellung flüssiger Lebensmittel verbinden muss.

Anschließend läuft das Programm zur Reinigung vollautomatisch ab, ohne dass der Benutzer hierzu steuernd eingreifen müsste. Insbesondere die Förderung von Reinigungsmittel mittels der Dosiervorrichtung in die Ausgabekammer kann von der Vorrichtung zur Herstellung flüssiger Lebensmittel über den Steueranschluss hinsichtlich der Menge des in die Ausgabekammer beförderten Reinigungsmittels und dem Zeitpunkt, an dem sich das Reinigungsmittel in der Ausgabekammer befindet, über ein in der Vorrichtung vorgegebenes Steuerprogramm gesteuert werden.

Häufig ist es bei zur Bewirtung verwendeten Vorrichtungen zur Herstellung flüssiger Lebensmittel notwendig, dass die Reinigung mit mindestens zwei unterschiedlichen Reinigungsmitteln durchgeführt wird. Vorteilhafterweise ist das erfindungsgemäße Reinigungsmodul daher derart ausgeführt, dass es zusätzlich mindestens einen zweiten Reinigungsmittelbehälter umfasst, welcher derart mit der Dosiervorrichtung und der Ausgabekammer verbunden ist, dass Reinigungsmittel mittels der Dosiervorrichtung aus dem zweiten Reinigungsmittelbehälter in die Ausgabekammer förderbar ist. Die Dosiervorrichtung ist dabei derart ausgeführt, dass wahlweise Reinigungsmittel aus dem ersten und/oder aus dem zweiten Reinigungsmittelbehälter in die Ausgabekammer förderbar ist.

In dieser Ausführungsform ist es somit möglich, ein Reinigungsverfahren bei dem sukzessive und/oder gleichzeitig zwei verschiedene Reinigungsmittel verwendet werden durchzuführen, ohne dass ein Eingreifen des Benutzers notwendig wäre. Vielmehr wird durch ein in der Vorrichtung zur Herstellung flüssiger Lebensmittel vorgegebenes Steuerprogramm die Dosiervorrichtung über den Steueranschluss derart gesteuert, dass zu den gewünschten Zeitpunkten das vorgegebene Reinigungsmittel oder ein vorgegebenes Mischverhältnis aus den Reinigungsmitteln in der Ausgabekammer vorhanden ist und von dieser in den Flüssigkeitskreislauf der Vorrichtung zur Herstellung flüssiger Lebensmittel gefördert wird, um eine gewünschte Reinigungswirkung zu erzielen.

Auch in dieser Ausführungsform ergibt sich somit der Vorteil, dass der Benutzer lediglich das Vorhandensein einer ausreichenden Menge des ersten und des zweiten Reinigungsmittels in den entsprechenden Reinigungsmittelbehältern des Reinigungsmoduls überprüfen muss und nach Verbinden des Reinigungsmoduls mit dem Flüssigkeitskreislauf der Vorrichtung zur Herstellung flüssiger Lebensmittel sowie des Steueranschlusses des Reinigungsmoduls mit einem entsprechenden Steueranschluss der Vorrichtung läuft das Reinigungsprogramm automatisch ab, sodass insbesondere auch Bedienungsfehler durch den Benutzer vermieden werden und eine korrekte Reinigung gewährleistet werden kann, insbesondere auch eine Reinigung, welche vorgegebenen Mindeststandards entspricht.

Vorteilhafterweise umfasst die Dosiervorrichtung eine Pumpe und ein Mehrwegeventil, wobei das Mehrwegeventil mit jedem der Reinigungsmittelbehälter und der Pumpe derart verbunden ist, dass mittels des Mehrwegeventils die Pumpe wahlweise mit dem ersten oder mit dem zweiten Reinigungsmittelbehälter verbindbar ist. In dieser Ausführungsform ist somit lediglich eine Pumpe notwendig, welche mittels des Mehrwegeventils wahlweise mit einem der Reinigungsmittelbehälter verbindbar ist, so dass wahlweise mittels der Pumpe über das Mehrwegeventil Reinigungsmittel aus dem ersten oder zweiten Reinigungsmittelbehälter in die Ausgabekammer gefördert wird.

Mehrwegeventil und Pumpe sind dabei mit dem Steueranschluss verbunden und derart ausgeführt, dass mittels Steuersignalen über den Steueranschluss die wahlweise Verbindung der Pumpe mit dem ersten oder zweiten Reinigungsmittelbehälter vorgegeben werden kann.

In einer vorteilhaften Ausführungsform umfasst die Dosiervorrichtung mindestens zwei Pumpen, wobei eine erste Pumpe mit dem ersten Reinigungsmittelbehälter und der Ausgabekammer und eine zweite Pumpte mit dem zweiten Reinigungsmittelsbehälter und der Ausgabekammer flüssigkeitsleitend verbunden ist. In dieser Ausführungsform ist somit kein Mehrwegeventil erforderlich, hingegen sind beide Pumpen mit dem Steueranschluss verbunden und mittels Steuersignalen kann wahlweise Reinigungsmittel aus dem ersten oder aus dem zweiten Behälter oder aus beiden Behältern gleichzeitig mittels der Pumpen in die Ausgabekammer abhängig von den über den Steueranschluss übermittelten Steuersignalen gefördert werden.

Weiterhin ist das erfindungsgemäße Reinigungsmodul derart ausgeführt, dass über den Steueranschluss nicht nur Steuersignale an mindestens eine Pumpe und/oder ein Mehrwegeventil der Dosiervorrichtung übermittelt werden, sondern gleichzeitig auch die Energieversorgung mittels elektrischer Energie Ober den Steueranschluss erfolgt. In dieser Ausführungsform ergibt sich somit der Vorteil, dass der Benutzer lediglich einen Anschluss, den Steueranschluss des Reinigungsmoduls mit einem entsprechenden Steueranschluss der Vorrichtung zur Herstellung flüssiger Lebensmittel verbinden muss und dadurch sämtliche notwendige elektrische Verbindungen hergestellt sind.

In einer weiteren vorteilhaften Ausführungsform ist der Steueranschluss und/oder der Stromversorgungsanschluss des Reinigungsmoduls als ein kabellos verbindbarer, induktiver Anschluss ausgeführt. In dieser vorteilhaften Ausgestaltung ist es somit lediglich notwendig, dass das Reinigungsmodul an einer entsprechenden Position relativ zu der Vorrichtung zur Herstellung flüssiger Lebensmittel angeordnet wird und dass die Vorrichtung korrespondierend zu dem induktiven Anschluss des Reinigungsmoduls einen entsprechenden induktiven Anschluss aufweist. Hierdurch entfällt der Arbeitsschritt des manuellen Verbindens des Steueranschlusses für den Benutzer, da lediglich die korrekte Anordnung des Reinigungsmoduls bereits eine induktive Verbindung zwischen Reinigungsmodul und der Vorrichtung zur Herstellung flüssiger Lebensmittel gewährleistet und über diesen induktiven Anschluss die Steuersignale und/oder die Stromversorgung des Reinigungsmoduls gewährleistet ist.

Vorteilhafterweise weist das Reinigungsmodul einen Frischwassereinlass auf, welcher mit der Ausgabekammer flüssigkeitsleitend verbunden ist. Hierbei ist es insbesondere vorteilhaft, wenn der Frischwassereinlass als eine Öffnung in einer Oberseite einer Ausgabekammer ausgeführt ist.

Dies ist insbesondere dann vorteilhaft, wenn die Vorrichtung zur Herstellung flüssigen Lebensmittels einen korrespondierenden Frischwasserauslass aufweist, unter dem das Reinigungsmodul derart angeordnet wird, dass Frischwasser über den Frischwasserauslass in den Frischwassereinlass und damit in die Ausgabekammer des Reinigungsmoduls fließen kann.

In dieser Ausführungsform kann somit neben den Reinigungsmitteln zusätzlich Frischwasser in die Ausgabekammer gefüllt werden. Hierdurch ergeben sich weitere Vorteile:

Zum Einen kann sowohl die Ausgabekammer als auch der Flüssigkeitskreislauf der Vorrichtung zur Herstellung flüssiger Lebensmittel mittels in die Ausgabekammer einströmenden Frischwassers gespült werden. Dies ermöglicht die Beseitigung von Reinigungsmittelrückständen nicht nur in der Vorrichtung zur Herstellung flüssiger Lebensmittels sondern ebenso in der Ausgabekammer. Darüber hinaus ist es in dieser Ausführungsform möglich, dass in den oder in die Reinigungsmittelbehälter des Reinigungsmoduls Reinigungsmittelkonzentrat gefüllt wird, wobei in der Ausgabekammer mittels Frischwasser und Reinigungsmittelkonzentrat ein Reinigungsmittel-Frischwassergemisch in gewünschter Konzentration hergestellt wird, bevor dieses Gemisch zur Reinigung des Flüssigkeitskreislaufes der Vorrichtung zur Herstellung flüssiger Lebensmittel verwendet wird.

Die Verwendung von Reinigungsmittelkonzentrat ergibt den Vorteil, dass der Benutzer den oder die Reinigungsmittelbehälter des Reinigungsmoduls weniger oft wieder auffüllen muss, verglichen mit der Verwendung von unverdünnbar verwendbarem Reinigungsmittel.

Ebenso liegt es im Rahmen der Erfindung, dass das Reinigungsmodul zusätzlich einen Frischwasserbehälter aufweist, welcher ebenfalls über die Dosiervorrichtung mit der Ausgabekammer verbunden ist, so dass wahlweise Frischwasser aus dem Frischwasserbehälter des Reinigungsmoduls in die Ausgabekammer gefördert wird und dort zur Vermischung mit Reinigungsmittel oder zum Spülen verwendet wird. In dieser Ausgestaltung ist kein Frischwasserauslass der Vorrichtung zur Herstellung flüssiger Lebensmittel notwendig.

Vorteilhafterweise sind Reinigungsmittelbehälter sowie ein eventueller Frischwasserbehälter, Dosiervorrichtung und Ausgabekammer in einem gemeinsamen Gehäuse angeordnet. Dies ermöglicht eine einfache Handhabung durch den Benutzer, der das Gehäuse mit allen Bestandteilen des Reinigungsmoduls in einem Handgriff an oder in der Vorrichtung zur Herstellung flüssiger Lebensmittel anordnen kann. Vorteilhafterweise weist das Gehäuse hierzu einen an der Oberseite angeordneten Tragegriff auf, so dass eine einfache Handhabung durch den Benutzer gewährleistet ist.

Insbesondere ist es vorteilhaft, dass das Reinigungsmodul als Einschubmodul ausgebildet ist. Das Reinigungsmodul kann somit von dem Benutzer in eine entsprechende Ausnehmung der Vorrichtung zur Herstellung flüssiger Lebensmittel eingeschoben werden, wobei durch Führungshilfen, wie etwa Führungsschienen oder entsprechende Wände des Einschubs gewährleistet wird, dass nach Einschieben des Reinigungsmoduls dieses sich an der gewünschten und korrekten Positionierung relativ zur Vorrichtung zur Herstellung flüssiger Lebensmittel befindet. Hierzu ist vorteilhafterweise mindestens ein Griff an einer Vorderseite des Reinigungsmoduls zum Einschieben und Herausziehen des Reinigungsmoduls ausgebildet, um wiederum eine einfache und zügige Handhabung durch den Benutzer zu ermöglichen.

Die Reinigungsmittelbehälter und die Dosiervorrichtung können für Reinigungsmittel in unterschiedlichen Zustandsformen geeignet ausgeführt sein. So liegt es im Rahmen der Erfindung, den Reinigungsmittelbehälter des Reinigungsmoduls als Tablettenbehälter auszuführen und die Dosiervorrichtung entsprechend als Tablettendosiervorrichtung auszugestalten, welche eine mittels der Steuersignale über den Steueranschluss vorgegebene Anzahl von Tabletten aus dem Reinigungsmittelbehälter in die Ausgabekammer fördert. Ebenso ist eine Ausführung des Reinigungsmittelbehälters zur Aufnahme von pulverförmigen Reinigungsmittel denkbar und eine entsprechende Ausgestaltung der Dosiervorrichtung, beispielsweise mittels einer Schneckenförderung, so dass eine durch die Steuersignale vorgegebene Menge von Reinigungsmittelpulver in die Ausgabekammer förderbar ist.

Versuche der Anmelderin haben jedoch ergeben, dass insbesondere die Verwendung von flüssigem Reinigungsmittel vorteilhaft ist, da dieses sich durch eine gute Dosierbarkeit, eine lange Haltbarkeit und ein einfaches Nachfüllen durch den Benutzer auszeichnet. Vorteilhafterweise ist der Reinigungsmittelbehälter des erfindungsgemäßen Reinigungsmoduls daher zur Aufnahme flüssiger Reinigungsmittel geeignet ausgeführt und die Dosiervorrichtung umfasst mindestens eine Dosierpumpe.

Vorteilhafterweise weist das Reinigungsmodul mindestens drei Reinigungsmittelbehalter zur Aufnahme flüssiger Lebensmittel auf, so dass auch eine Reinigung gemäß hohen lebensmitteltechnischen Standards durch ein erstes, ein zweites Reinigungsmittel und anschließend ein Desinfektionsmittel mit dem erfindungsgemäßen Reinigungsmodul vollautomatisch durchführbar ist.

Die Erfindung betrifft weiterhin eine Vorrichtung zur Herstellung von flüssigen Lebensmitteln, insbesondere von Kaffee.

Solche Vorrichtungen umfassen mindestens eine Förderleitung und eine Auslaufleitung, eine Förderpumpe, einen Auslauf und eine Steuereinheit. Die Förderpumpe ist mit der Förderleitung und dem Auslauf verbunden, so dass wahlweise Flüssigkeit über die Förderleitung angesaugt werden kann und von der Förderpumpe über die Auslaufleitung am Auslauf ausgegeben werden kann.

Die Steuereinheit ist mit der Förderpumpe zusammenwirkend ausgestaltet, so dass mittels Steuersignalen der Betriebszustand der Förderpumpe durch die Steuereinheit steuerbar ist.

Wesentlich ist, dass die erfindungsgemäße Vorrichtung einen Steueranschluss zum Anschließen einer Dosiervorrichtung aufweist und die Steuervorrichtung mit dem Steueranschluss und der Förderpumpe derart zusammenwirkend ausgestaltet ist, dass in einem Reinigungsmodus abhängig von Steuersignalen der Steuereinheit die Betriebszustände der Förderpumpe und einer an den Steueranschluss angeschlossenen Dosiervorrichtung steuerbar sind.

Die erfindungsgemäße Vorrichtung ist somit zur Verwendung eines vorhergehend beschriebenen erfindungsgemäßen Reinigungsmoduls geeignet ausgestaltet.

Der Benutzer muss lediglich die Förderleitung der Vorrichtung flüssigkeitsleitend mit der Ausgabekammer des zuvor beschriebenen Reinigungsmoduls verbinden und den Steueranschluss der Vorrichtung mit einem entsprechenden Steueranschluss des Reinigungsmoduls verbinden.

Die Steuereinheit umfasst vorteilhafterweise ein Reinigungsprogramm, in dem ein Reinigungsverfahren der Vorrichtung zur Herstellung von flüssigen Lebensmitteln vorgegeben ist. Abhängig von diesem Reinigungsprogramm gibt die Steuereinheit entsprechende Signale an die Förderpumpe und über den Steueranschluss an die Dosiervorrichtung, so dass in den durch das Reinigungsprogramm vorgegebenen Ablauf der Flüssigkeitskreislauf der Vorrichtung, d. h. zumindest die Förderleitung, die Auslaufleitung und der Auslauf der Vorrichtung gereinigt werden.

Weiterhin umfasst die Vorrichtung ein Mehrwegeventil, welches in der Auslaufleitung angeordnet ist. Das Mehrwegeventil ist mit der Steuereinheit derart zusammenwirkend ausgestaltet, dass abhängig von Steuersignalen der Steuereinheit wahlweise die Förderpumpe mittels des Mehrwegeventils über die Auslaufleitung mit dem Auslauf oder über eine Spülleitung mit mindestens einer weiteren Komponente der Vorrichtung flüssigkeitsleitend verbindbar ist.

Mittels des Mehrwegeventils kann somit der Flussweg ausgehend von der Förderleitung zwischen der Auslaufleitung und mindestens einer weiteren Komponente der Vorrichtung wahlweise vorgegeben werden. Da auch das Mehrwegeventil der Vorrichtung mit der Steuereinheit verbunden ist, kann in dem Reinigungsprogramm eine beliebige Zeitdauer, Reinigungsmittelart und/oder Reinigungsmittelmenge zur Reinigung einerseits der Auslaufleitung und andererseits der weiteren Komponente der Vorrichtung vorgegeben werden. Es ist somit eine vollautomatische Reinigung mehrerer Flusswege der Vorrichtung bzw. mehrerer Komponenten der Vorrichtung mit unterschiedlichen Parametern wie Zeitdauer, Reinigungsmittelmenge und/oder Reinigungsmittelkonzentration über das Reinigungsprogramm in der Steuervorrichtung vorgebbar.

Hierdurch ist eine korrekte Reinigung gegebenenfalls unter Verwendung eines komplexen Reinigungsverfahrens vollautomatisch möglich und Bedienungsfehler durch den Benutzer sind ausgeschlossen.

Ein typisches Anwendungsgebiet sind Vorrichtungen zur Herstellung von Kaffee. Solche Vorrichtungen umfassen typischerweise eine Brüheinheit zur Herstellung von Kaffee. Vorteilhafterweise ist die erfindungsgemäße Vorrichtung als solch eine Vorrichtung zur Herstellung von Kaffee ausgeführt und umfasst weiterhin eine Brüheinheit-Spülleitung sowie ein wie zuvor beschriebenes Mehrwegeventil. Das Mehrwegeventil ist mit der Brüheinheit-Spülleitung und der Auslaufleitung sowie der Förderpumpe verbunden, so dass wahlweise die Förderpumpe entweder über das Mehrwegeventil mit der Brüheinheit-Spülleitung oder über das Mehrwegeventil mit der Auslaufleitung flüssigkeitsleitend verbindbar ist.

Vorteilhafterweise weist die erfindungsgemäße Vorrichtung einen Instantmischer auf, welcher über eine Instantmischer-Spülleitung mit dem zuvor beschriebenen Mehrwegeventil verbunden ist. Das Mehrwegeventil ist dabei derart ausgestaltet, dass die Förderpumpe wahlweise mit der Auslaufleitung oder der Brüheinheit-Spülleitung oder der Instantmischer-Spülleitung abhängig von den Steuersignalen der Steuereinheit verbindbar ist.

Es liegt im Rahmen der Erfindung, andere und/oder weitere Komponenten der Vorrichtung zur Herstellung von flüssigen Lebensmitteln über entsprechende Spülleitungen mit einem entsprechend ausgestalteten Mehrwegeventil zu verbinden, so dass mittels der Steuereinheit wahlweise jede Komponente gespült werden kann, wobei insbesondere für jede Komponente unterschiedliche Reinigungsverfahren vorgegeben werden können, insbesondere unterschiedliche Reinigungsmittel, Dauer der Reinigung und/oder Konzentration des Reinigungsmittels.

Die Erfindung betrifft weiterhin eine Vorrichtung zur Herstellung von flüssigen Lebensmitteln, insbesondere von Kaffee, gemäß Anspruch 13. Eine solche erfindungsgemäße Vorrichtung umfasst die bereits beschriebenen Komponenten Förderleitung, Auslaufleitung, Förderpumpe, Auslauf und eine Steuereinheit in der oben beschriebenen Ausgestaltung. Wesentlich ist, dass die Vorrichtung eine Frischwasserzufuhrleitung mit einem Frischabwasserabsperrventil umfasst. Die Frischwasserzufuhrleitung mündet in einem Frischwasserauslauf, welcher mit einer Ausgabekammer eines Reinigungsmoduls wie vorhergehend beschrieben flüssigkeitsleitend verbindbar ist. Das Frischwasserabsperrventil ist derart mit der Steuereinheit zusammenwirkend ausgestaltet, dass anhängig von Steuersignalen der Steuereinheit die Frischwasserzufuhr zu- und abschaltbar ist.

Diese Erfindungsgemäße Vorrichtung ermöglicht somit ein automatisches Befüllen eines unter dem Frischwasserauslauf angeordneten Behälters mit Frischwasser und ein Fördern von Flüssigkeit aus dem Behälter mittels der Förderleitung, zum Reinigen und Spülen der Vorrichtung. Bei dieser Ausgestaltung ist es somit möglich, dass ein herkömmlicher Behälter mit Reinigungsmittel oder Reinigungsmittelkonzentrat unter den Frischwasserauslauf gestellt wird und anschließend das Reinigungsmittel in einem automatischen, durch die Steuereinheit gesteuerten Reinigungszyklus zur Reinigung der Vorrichtung mittels der Förderpumpe über die Förderleitung gefördert wird.

Bei Verwendung von Reinigungsmittelkonzentrat ist es vorteilhaft, wenn die Steuereinheit derart ausgestaltet ist, dass zunächst das Reinigungsmittelkonzentrat in dem Behälter mittels Frischwasserzufuhr über den Frischwasserauslauf auf eine vorgegebene Konzentration verdünnt wird und anschließend das Reinigungsmittelgemisch zur Reinigung der Vorrichtung verwendet wird. Insbesondere ist es vorteilhaft, wenn die Steuereinheit derart ausgeführt ist, dass zunächst das Reinigungsmittel oder Reinigungsmittelgemisch vollständig aus dem Behälter entfernt wird und anschließend Frischwasser in den Behälter über den Frischwasserauslauf gefüllt wird, so dass in einem weiteren Schritt die Vorrichtung mittels der Förderpumpe über die Förderleitung mit dem Frischwasser gespült wird und eventuelle Reinigungsmittelreste beseitigt werden. Es ist somit aufgrund der mittels der Steuereinheit steuerbaren Frischwasserzufuhr ein automatischer Spülvorgang der Vorrichtung möglich, ohne dass ein erfindungsgemäßes Reinigungsmodul notwendig wäre.

Insbesondere ist es vorteilhaft, die zuvor beschriebene Vorrichtung zusätzlich gemäß mindestens einem der Ansprüche 13 bis 16 auszuführen, so dass sowohl der Vorteil der steuerbaren Frischwasserzufuhr, als auch die Vorteile bei der Verwendung eines erfindungsgemäßen Reinigungsmoduls vorliegen.

Über die Steuereinheit sind in diesem Fall somit in einem Reinigungsprogramm nicht nur Förderung und Fördermenge der Reinigungsmittel vorgebbar, sondern ebenso Mischverhältnisse von Frischwasser und Reinigungsmittel in einer Ausgabekammer des Reinigungsmoduls über eine entsprechende Steuerung des Frischwasserabsperrventils und Menge und Dauer eines Spülvorgangs mit Frischwasser.

Typischweise weisen Vorrichtungen zur Herstellung flüssiger Lebensmittel, insbesondere Kaffeemaschinen, eine Kühlkammer auf, welche zur Aufnahme von Behältern mit flüssigen Lebensmitteln oder Lebensmittelzusätzen geeignet ausgestaltet ist. Beispielsweise werden bei Kaffeemaschinen Milchbehälter in solchen Kühlkammer gelagert. Die Förderleitung der Vorrichtung mündet in der Kühlkammer, so dass die Förderleitung in der Kühlkammer in einen Milchbehälter eingeführt werden kann und somit Milch aus der Kühlkammer mittels der Förderpumpe über die Förderleitung förderbar ist.

Vorteilhafterweise umfasst die Vorrichtung mindestens ein erfindungsgemäßes Reinigungsmodul wie vorhergehend beschrieben und das Reinigungsmodul und die Kühlkammer der Vorrichtung sind derart ausgeführt, dass das Reinigungsmodul in die Modulkammer einschiebbar ist.

In dieser vorteilhaften Ausführungsform muss der Benutzer zur Reinigung lediglich den Behälter wie z. B. den Milchbehälter entfernen und anstelle des Milchbehälters das Reinigungsmodul in die Kühlkammer einschieben und entsprechend die Förderleitung in die Ausgabekammer des Reinigungsmodul einführen.

In einer vorteilhaften Ausgestaltung umfasst diese Vorrichtung zusätzlich eine Frischwasserzufuhrleitung wie vorhergend beschrieben, welche in der Kühlkammer mündet. Der Frischwassereinlass des Reinigungsmoduls und die Mündung der Frischwasserzufuhrleitung ist derart angeordnet, dass bei in die Kühlkammer eingeschobenem Reinigungsmodul die Mündung der Frischwasserzufuhrleitung über dem Frischwassereinlass des Reinigungsmoduls liegt.

Hierbei ist es insbesondere vorteilhaft, wenn die Kühlkammer Führungsschienen für das Reinigungsmodul zur genauen Positionierung aufweist bzw. das Reinigungsmodul in etwa die Innenabmessungen hinsichtlich der Breite und Länge der Kühlkammer aufweist, so dass bei Einschieben des Reinigungsmoduls automatisch eine vorgegebene Positionierung relativ zur Kühlkammer stattfindet.

Die erfindungsgemäße Vorrichtung umfasst insbesondere Vorrichtungen zur Herstellung von Kaffe. Ebenso liegt es im Rahmen der Erfindung, die Vorrichtung zur Herstellung anderer flüssiger Lebensmittel geeignet auszugestalten, insbesondere durch Vermischung eines Konzentrats wie beispielsweise eines Instant-Pulvers mit einer Flüssigkeit.

Die Erfindung betrifft weiterhin ein Verfahren zur Reinigung einer Vorrichtung zur Herstellung von flüssigen Lebensmitteln, insbesondere von Kaffee, welches folgende Schritte umfasst:

In einem Schritt A wird Reinigungsmittel aus einem Reinigungsmittelbehälter mittels einer Dosiervorrichtung in eine Ausgabekammer zugeführt.

In einem Schritt B wird Reinigungsmittel aus der Ausgabekammer mittels einer Förderpumpe gefördert und durch eine Auslaufleitung und einen Auslauf der Vorrichtung geleitet, so dass diese mittels des Reinigungsmittels gereinigt werden.

In einem Schritt C wird Frischwasser in die Ausgabekammer zugeführt und in einem Schritt D wird das Frischwasser aus der Ausgabekammer mittels der Förderpumpe gefördert und durch die Auslaufleitung und den Auslauf der Vorrichtung geleitet, so dass diese mittels des Frischwassers gespült werden.

Wesentlich ist, dass die Zuführung von Rein gungsmittel und Frischwasser in die Ausgabekammer dadurch automatisch geschieht, dass diese Verfahrensschritte mittels einer Steuervorrichtung der Vorrichtung gesteuert werden. Vor Verfahrensschritt A wird benutzerseitig ein erfindungsgemäßes Reinigungsmodul in oder an der Vorrichtung angeordnet, eine mit der Förderpumpe fluitleitend verbundene Leitung in die Ausgabekammer eingeführt und ein Steueranschluss der Vorrichtung mit einem Steueranschluss des Reinigungsmoduls verbunden.

Vorteilhafterweise wird bei dem erfindungsgemäßen Verfahren in Schritt A zusätzlich Frischwasser in die Ausgabekammer zugeführt, so dass in der Ausgabekammer ein Gemisch von Reinigungsmittel und Frischwasser entsteht. Das Mischverhältnis wird hierbei über die Steuereinheit vorgegeben, welche die Dosiervorrichtung und ein Absperrventil in der Frischwasserzufuhrleitung entsprechend steuert. Weiterhin wird in Schritt anstelle des Reinigungsmittels das wie zuvor beschriebene erzeugte Gemisch von Frischwasser und Reinigungsmittel aus der Ausgabekammer zum Reinigen der Vorrichtung verwendet.

Weiterhin ist es vorteilhaft, wenn bei dem erfindungsgemäßen Verfahren zwischen Schritt B und Schritt C folgende Schritte ausgeführt werden:

In einem Schritt B.1 wird ein zweites Reinigungsmittel aus einem zweiten Reinigungsmittelbehälter mittels der Dosiervorrichtung in die Ausgabekammer zugeführt und in einem Schritt B.2 wird das zweite Reinigungsmittel aus der Ausgabekammer mittels der Förderpumpe gefördert und durch die Auslaufleitung und den Auslauf der Vorrichtung geleitet, so dass diese in dem Schritt B.2 mittels des zweiten Reinigungsmittels gereinigt werden.

Insbesondere ist es vorteilhaft, wenn in Schritt B.1 zusätzlich Frischwasser in die Ausgabekammer zugeführt wird, so dass in der Ausgabekammer ein Gemisch von zweitem Reinigungsmittel und Frischwasser vorliegt, wobei das Mischverhältnis über die Steuereinheit vorgegeben wird und dass in Schritt B.2 anstelle des Reinigungsmittels das wie zuvor beschriebene Gemisch von Frischwasser und zweitem Reinigungsmittel zum Reinigen der Vorrichtung verwendet wird.

Weiterhin ist es vorteilhaft, wenn das gesamte Reinigungsverfahren teilweise oder insgesamt mehrmals durchlaufen wird, wobei in einem Durchlauf wie zuvor beschrieben Auslaufleitung und Auslauf der Vorrichtung gereinigt und gespült werden und in einem weiteren Durchlauf die Förderpumpe mit einer weiteren Komponente wie z. B. einer Brüheinheit der Vorrichtung verbunden wird, so dass in diesem weiteren Durchlauf die Brüheinheit gereinigt und gespült wird. Insbesondere ist es vorteilhaft, wenn in einem zusätzlichen weiteren Durchlauf die Förderpumpe mit weiteren Komponenten der Vorrichtung wie beispielsweise einem Instantmischer verbunden wird, so dass auch diese weitere Komponente gereinigt und gespült wird.

Vorteilhafterweise verläuft der gesamte zuvor beschriebene Reinigungsablauf automatisch, indem er von der Steuereinheit gesteuert wird.

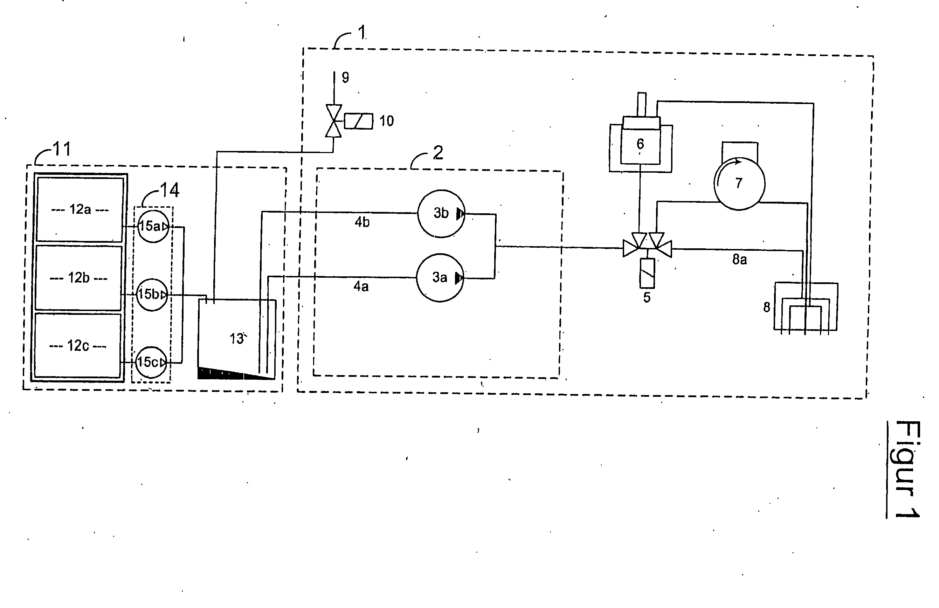

Weitere vorteilhafte Ausgestaltungen der Erfindung werden nachfolgend anhand eines in Figur 1 dargestellten Ausführungsbeispiels erläutert. Dabei zeigt:

Figur 1 ein Ausführungsbeispiel einer als Kaffeemaschine ausgeführten erfindungsgemäßen Vorrichtung zur Herstellung von flüssigen Lebensmittel mit einem erfindungsgemäßen Einschubmodul in Flussschema-Darstellung.

Die in Figur 1 dargestellte als Kaffeemaschine 1 ausgeführte erfindungsgemäße Vorrichtung zur Herstellung flüssiger Lebensmittel umfasst eine Kühleinheit 2 mit Förderpumpen 3 (erste Förderpumpe 3a und zweite Förderpumpe 3b). Die Förderpumpen 3 sind saugseitig jeweils mit Förderleitungen 4 (erste Förderleitung 4a und zweite Förderleitung 4b) verbunden.

Die Kaffeemaschine umfasst ferner ein Mehrwegeventil 5, eine Brüheinheit 6, einen Instantmischer 7, einen Auslauf 8 und eine Frischwasserzufuhrleitung 9 mit einem Frischwasserabsperrventil 10.

Die erfindungsgemäße Kaffeemaschine umfasst ferner ein als Einschubmodul 11 ausgeführtes Reinigungsmodul, welches wiederum drei Reinigungsmittelbehälter 12 (erster Reinigungsmittelbehälter 12a, zweiter Reinigungsmittelbehälter 12b und dritter Reinigungsmittelbehälter 12c) umfasst sowie eine Ausgabekammer 13 und eine Dosiervorrichtung 14. Die Dosiervorrichtung 14 umfasst wiederum drei Dosierpumpen 15 (eine erste Dosierpumpe 15a, eine zweite Dosierpumpe 15b und eine dritte Dosierpumpe 15c).

Die Kaffeemaschine 1 umfasst ferner eine nicht dargestellte Steuereinheit, welche die Förderpumpen 3, das Mehrwegeventil 5 und das Frischwasserabsperrventil 10 mittels Steuersignalen steuert.

Die Steuereinheit ist weiterhin mit einem nicht dargestellten Steueranschluss der Kaffeemaschine verbunden und das Einschubmodul weist ebenfalls einen Steueranschluss auf, der mit dem Steueranschluss der Kaffeemaschine durch den Benutzer verbindbar ist. Sind beide Steueranschlüsse verbunden, so steht die Steuervorrichtung weiterhin mit den Dosierpumpen 15a, 15b und 15c in Verbindung und steuert diese mittels Steuersignalen. Über die Steueranschlüsse werden die Dosierpumpen 15 neben Steuersignalen auch mit elektrischer Energie versorgt.

Darüber hinaus weisen die Reinigungsmittelbehälter 12 jeweils Füllstandssensoren auf, die ebenfalls über die Steueranschlüsse mit der Steuereinheit verbunden sind. Die Füllstandssensoren geben jeweils Messsignale an die Steuereinheit ab und die Steuereinheit ermittelt aus diesen Messsignalen den Füllstand der Reinigungsmittel für jeden der Reinigungsmittelbehälter 12a, 12b und 12c.

Im normalen Betrieb ist das Einschubmodul nicht mit der Kaffeemaschine verbunden, stattdessen befinden sich in einer Kühlkammer einer Kühleinheit 2 zwei Lebensmittelbehälter, die jeweils mit einer der Förderleitungen 4a und 4b verbunden sind. Typischweise sind diese Lebensmittelbehälter Milchbehälter, so dass mittels der Förderpumpen 3a und 3b Milch über Mehrwegeventil 5 zu dem Auslauf 8 förderbar ist und somit neben von der Brüheinheit 6 erzeugten Kaffee zusätzlich Milch an dem Auslauf ausgegeben werden kann.

Die Kühleinheit besitzt daher zwei Förderleitungen 4 und zwei Förderpumpen 3, damit verschiedene Milcharten wahlweise über den Auslauf ausgegeben werden können, beispielsweise Vollmilch und fettreduzierte Milch.

Zur Reinigung der Kaffeemaschine 1 entfernt der Benutzer die Lebensmittelbehälter aus der Kühlkammer der Kühleinheit 2 und schiebt stattdessen das Einschubmodul 11 in die Kühlkammer der Kühleinheit 2. Sämtliche Komponenten 12 bis 15 des Einschubmodels 11 sind in einem Gehäuse angeordnet, welches an der Oberseite und an der Vorderseite des Gehäuses einen Griff aufweist. Der Benutzer kann somit auf einfache Weise das Einschubmodul in die Kühlkammer der Kühleinheit einschieben.

Die Ausgabekammer 13 des Einschubmoduls 11 weist an der Oberseite eine Öffnung auf. In diese Öffnung führt der Benutzer die Förderleitungen 4a und 4b, welche in die Kühlkammer der Kühleinheit münden, ein, so dass die Förderleitungen in etwa am Boden der Ausgabekammer 13 münden.

Wie zuvor beschrieben, weist das Einschubmodul 11 drei Reinigungsmittelbehälter auf, wobei in dem Reinigungsmittelbehälter 12a ein erstes flüssiges Reinigungsmittel, in dem Reinigungsmittelbehälter 12b ein zweites flüssiges Reinigungsmittel und in dem Reinigungsmittelbehälter 12c ein flüssiges Desinfektionsmittel jeweils in konzentrierter Form eingefüllt sind.

Nach Einschieben des Einschubmoduls 11 in die Kühlkammer der Kühleinheit 2 und Einführen der Förderleitungen.4a und 4b in die Ausgabekammer 13 verbindet der Benutzer noch den Steuereinschluss des Einschubmoduls mit dem Steueranschluss der Kaffeemaschine, so dass die Steuervorrichtung der Kaffeemaschine mit den zuvor beschriebenen Komponenten des Einschubmoduls verbunden ist.

Schließlich startet der Benutzer über eine nicht dargestellte Eingabeeinheit ein in der Steuereinheit gespeichertes Reinigungsprogramm, welches nun vollautomatisch die Reinigung der Kaffeemaschine vorgibt.

Zunächst wird mittels der Füllstandsensoren überprüft, ob in jedem der Reinigungsmittelbehälter 12 eine ausreichende Menge Reinigungsmittel für das gesamte Reinigungsprogramm vorhanden ist. Sofern dies nicht der Fall ist, wird dem Benutzer über eine nicht dargestellte Anzeige ein optisches und/oder akustisches Warnsignal ausgegeben.

Bei ausreichendem Füllstand in jedem der Reinigungsmittelbehälter wird zunächst mittels der Dosierpumpe 15a eine vorgegebene Menge des ersten Reinigungsmittels in die Ausgabekammer 13 gefördert. Die Ausgabekammer 13 weist an der Oberseite einen Frischwassereinlass auf. Die Frischwasserzufuhrleitung 9 der Kaffeemaschine mündet in der Kühlkammer der Kühleinheit und die Mündung ist derart angeordnet, dass sie bei eingeschobenen Einschubmodul 11 über den Frischwassereinlass des Einschubmoduls 11 angeordnet ist.

Nachdem nun das erste Reinigungsmittel in einer vorgegebenen Menge in die Ausgabekammer gefördert wurde, wird durch entsprechende Steuerung des Frischwasserabsperrventils 10 Frischwasser in die Ausgabekammer in einer vorgegebenen Menge hinzugeführt, so dass in der Ausgabekammer 13 eine Mischung von Frischwasser und Reinigungsmittel 1 mit einer vorgegebenen Konzentration des Reinigungsmittels 1 vorliegt.

Anschließend wird mittels der Förderpumpen 3a und 3b gleichzeitig das Reinigungsmittelgemisch über die Förderleitungen 4b und 4a zu dem Mehrwegeventil 5 gefördert. Das Mehrwegeventil 5 ist derart geschaltet, dass zunächst eine Auslaufleitung 8a und der Auslauf 8 durchflossen und entsprechend gereinigt werden. Hierbei werden selbstverständlich ebenso die Förderleitungen 4a und 4b sowie die Verbindungsleitungen zwischen Förderpumpe 3a und 3b und Mehrwegeventil 5 gereinigt.

Anschließend wird Desinfektionsmittel aus dem Reinigungsmittelbehälter 12c mittels der Dosierpumpe 15c in die Ausgabekammer 13 gefördert und von dort mittels der Förderpumpen 3a und 3b über die Förderleitungen 4a und 4b sowie die Auslaufleitung 8a zu dem Auslauf 8 gepumpt, so dass nach der Reinigung noch eine Desinfektion durchgeführt wird.

Anschließend wird über die Frischwasserzufuhrleitung 9 Frischwasser in die Ausgabekammer 13 geleitet und dieses ebenso zu dem Auslauf 8 gepumpt, so dass ein Spülvorgang stattfindet und Reinigungsmittelreste oder Desinfektionsmittelreste in dem Spülvorgang entfernt werden.

Nach Abschluss dieses ersten Reinigungszyklusses wird der Reinigungszyklus nun nochmals durchgeführt, hierbei wird jedoch das Mehrwegeventil 5 derart geschaltet, dass die Förderpumpen 3a und 3b nun über die Brüheinheit 6 und nicht mehr über die Auslaufleitung 8a mit dem Auslauf 8 verbunden sind.

In diesem zweiten Reinigungszyklus findet eine Reinigung wie vorhergehend beschrieben statt, diesmal wird jedoch anstelle des ersten Reinigungsmittels aus dem Reinigungsmittelbehälter 12a das zweite Reinigungsmittel aus dem Reinigungsmittelbehälter 12b verwendet. Dieses zweite Reinigungsmittel ist speziell für die Reinigung der Brüheinheit geeignet. Die übrigen Schritte der Reinigung erfolgen wie zuvor mit dem Unterschied, dass das zweite Reinigungsmittel entsprechend über die zweite Dosierpumpe 15b in die Ausgabekammer 13 gefördert wird.

In einem dritten Reinigungszyklus wird das Mehrwegeventil 5 schließlich derart geschaltet, dass die Förderpumpen 3a und 3b über den Instantmischer 7 mit dem Auslauf verbunden sind und entsprechend der Instantmischer 7 gereinigt wird, wobei dieser Reinigungsvorgang ebenfalls mit dem zweiten Reinigungsmittel aus dem zweiten Reinigungsmittelbehälter 12b vorgenommen wird.

Die gesamte Reinigung läuft gemäß dem in der Steuereinheit vorgegebenen Reinigungsprogramm vollautomatisch ab, ohne dass ein Eingreifen durch den Benutzer notwendig wäre.

Mit der vorliegenden Erfindung ist es somit erstmals möglich, eine Kaffeemaschine vollautomatisch zu reinigen und insbesondere unterschiendliche Komponenten mit unterschiedlichen Bedingungen, wie beispielsweise unterschiedlichen Reinigungsmitteln und/oder Reinigungsmittelkonzentrationen vollautomatisch zu reinigen.

## Patentansprüche

1. Reinigungsmodul für Maschinen zur Herstellung flüssiger Lebensmittel, insbesondere für Kaffeemaschinen,
umfassend mindestens einen Reinigungsmittelbehälter (12a, 12b, 12c) zur Aufnahme von Reinigungsmittel, mindestens eine Dosiervorrichtung (14) mit einem Steueranschluss und mindestens eine Ausgabekammer (13),
wobei die Dosiervorrichtung (14) derart mit dem Reinigungsbehälter (12a, 12b, 12c) und der Ausgabekammer (13) verbunden ist, dass Reinigungsmittel mittels der Dosiervorrichtung (14) aus dem Reinigungsmittelbehälter in die Ausgabekammer (13) förderbar ist,
**dadurch gekennzeichnet,**
**dass** Reinigungsmittelbehälter (12a, 12b, 12c), Dosiervorrichtung (14) und Ausgabekammer (13) eine bauliche Einheit bilden, derart, dass das Reinigungsmodul benutzerseitig zur Reinigung an oder in der Maschine anordbar ist,
**dass** die Ausgabekammer (13) eine Öffnung zum Einführen einer Förderleitung (4a, 4b) aufweist,
**dass** die Dosiervorrichtung (14) einen elektrischen Steuer- und Stromversorgungsanschluss aufweist, welcher mit mindestens einer Dosierpumpe (12a, 12b, 12c) und/oder einem Mehrwegeventil der Dosiervorrichtung (14) elektrisch leitend verbunden ist,
wobei der Steueranschluss benutzerseitig mit einem Steueranschluss einer Maschine zur Herstellung flüssiger Lebensmittel verbindbar ist.

2. Reinigungsmodul nach Anspruch 1,
**dadurch gekennzeichnet,**
**dass** Reinigungsmittelbehälter (12a, 12b, 12c), Dosiervorrichtung (14) und Ausgabekammer (13) in einem gemeinsamen Gehäuse angeordnet sind, vorzugsweise dass das Gehäuse einen an der Oberseite angeordneten Tragegriff aufweist, im Weiteren vorzugsweise, dass das Reinigungsmodul als Einschubmodul (11) ausgebildet ist, insbesondere, dass an dem Reinigungsmodul an einer Vorderseite mindestens ein Griff zum Einschieben und Herausziehen des Reinigungsmoduls ausgebildet ist.

3. Reinigungsmodul nach einem der vorangegangenen Ansprüche,
**dadurch gekennzeichnet,**
**dass** das Reinigungsmodul zusätzlich mindestens einen zweiten Reinigungsmittelbehälter (12b) umfasst, welcher derart mit der Dosiervorrichtung (14) und der Ausgabekammer (13) verbunden ist, dass Reinigungsmittel mittels der Dosiervorrichtung (14) aus dem zweiten Reinigungsmittelbehälter (12b) in die Ausgabekammer (13) förderbar ist und dass die Dosiervorrichtung (14) derart ausgeführt ist, dass wahlweise Reinigungsmittel aus dem ersten und/oder aus dem zweiten Reinigungsmittelbehälter (12a, 12b) in die Ausgabekammer (13) förderbar ist, insbesondere, dass die Dosiervorrichtung eine Dosierpumpe und ein Mehrwegeventil umfasst, wobei das Mehrwegeventil mit jedem der Reinigungsmittelbehälter und der Dosierpumpe derart verbunden ist, dass mittels des Mehrwegeventils die Dosierpumpe wahlweise mit dem ersten oder mit dem zweiten Reinigungsmittelbehälter verbindbar ist, im Weiteren vorzugsweise, dass die Dosiervorrichtung (14) mindestens zwei Dosierpumpen (15a, 15b) umfasst, wobei eine erste Dosierpumpe (15a) mit dem ersten Reinigungsmittelbehälter (12a) und der Ausgabekammer (13) und eine zweite Dosierpumpe (15b) mit dem zweiten Reinigungsmittelbehalter (12b) und der Ausgabekammer (13) flüssigkeitsleitend verbunden ist.

4. Reinigungsmodul nach mindestens einem der vorangegangenen Ansprüche,
**dadurch gekennzeichnet,**
**dass** der Steueranschluß und/oder der Stromversorgungsanschluss als ein kabellos verbindbarer, induktiver Anschluss ausgeführt ist.

5. Reinigungsmodul nach mindestens einem der vorangegangenen Ansprüche,
**dadurch gekennzeichnet,**
**dass** das Reinigungsmodul einen Frischwassereinlass aufweist, welcher mit der Ausgabekammer (13) leitend verbunden ist, insbesondere,
**dass** der Frischwassereinlass als eine Öffnung in einer Oberseite der Ausgabekammer (13) ausgeführt ist.

6. Reinigungsmodul nach mindestens einem der vorangegangenen Ansprüche,
**dadurch gekennzeichnet,**
**dass** die Öffnung in einer Oberseite der Ausgabekammer (13) ausgeführt ist.

7. Reinigungsmodul nach mindestens einem der vorangegangenen Ansprüche,
**dadurch gekennzeichnet,**
**dass** der Reinigungsmittelbehälter (12a, 12b, 12c) zur Aufnahme flüsslger Reinigungsmittel geeignet ausgeführt ist, insbesondere, dass das Reinigungsmodul drei Reinigungsmittelbehälter (12a, 12b, 12c) zur Aufnahme flüssiger Reinigungslebensmittel aufweist, welche jeweils über die Dosiervorrichtung (14) mit der Ausgabekammer (13) verbunden sind.

8. Vorrichtung zur Herstellung von flüssigen Lebensmitteln, insbesondere von Kaffee,
umfassend mindestens eine Förderleitung (4a, 4b) und eine Auslaufleitung (8a), eine Förderpumpe (3a, 3b) einen Auslauf (8) und eine Steuereinheit,
wobei die Förderpumpe (3a, 3b) mit der Förderleitung (4a, 4b) und dem Auslauf (8) verbunden ist, derart, dass Flüssigkeit über die Förderleitung zu der Förderpumpe ansaugbar ist und von der Förderpumpe über die Auslaufleitung (8a) zu dem Auslauf (8) förderbar ist,
wobei die Steuereinheit mit der Förderpumpe (3a, 3b) zusammenwirkend ausgestaltet ist, derart, dass die Steuereinheit den Betriebszustand der Förderpumpe mittels Steuersignalen steuert,
**dadurch gekennzeichnet,**
**dass** die Vorrichtung einen Steueranschluss zum Anschließen einer Dosiervorrichtung (14) aufweist und die Steuervorrichtung mit dem Steueranschluss und der Förderpumpe (3a, 3b) derart zusammenwirkend ausgestaltet ist, dass in einem Reinigungsmodus abhängig von Steuersignalen der Steuereinheit die Betriebszustände der Förderpumpe und einer an den Steueranschluss angeschlossenen Dosiervorrichtung (14) steuerbar sind, dass die Vorrichtung ein Mehrwegeventil (5) umfasst, welches in der Auslaufleitung (8a) angeordnet ist, wobei das Mehrwegeventil (5) mit der Steuereinheit derart zusammenwirkend ausgestaltet ist, dass abhängig von Steuersignalen der Steuereinheit wahlweise die Förderpumpe (3) mittels des Mehrwegeventils über die Auslaufleitung (8a) mit dem Auslauf (8) oder über eine Spülleitung mit mindestens einer weiteren Komponente der Vorrichtung flüssigkeitsleitend verbindbar ist, vorzugsweise, dass die Vorrichtung eine Brüheinheit (6) zur Herstellung von Kaffee und eine Brüheinheit-Spülleitung umfasst,wobei das Mehrwegeventil (5) derart ausgestaltet ist, dass abhängig von Steuersignalen der Steuereinheit wahlweise die Förderpumpe (3a, 3b) mittels des Mehrwegeventils (5) über die Brüheinheit-Spülleitung mit der Brüheinheit (6) flüssigkeitsleitend verbindbar ist.

9. Vorrichtung nach Anspruch 8,
**dadurch gekennzeichnet,**
**dass** die Vorrichtung einen Instantmischer (7) und eine Instantmischer-Spülleitung umfasst, wobei das Mehrwegeventil (5) derart ausgestaltet ist, dass abhängig von Steuersignalen der Steuereinheit wahlweise die Förderpumpe (3a, 3b) mittels des Mehrwegeventils über Instantmischer-Spülleitung mit dem Instantmischer (7) flüssigkeitsleitend verbindbar ist.

10. Vorrichtung nach mindestens einem der Ansprüche 8 bis 9, umfassend mindestens eine Förderleitung (4a, 4b) und eine Auslaufleitung (8a), eine Förderpumpe (3a, 3b) einen Auslauf (8) und eine Steuereinheit,
wobei die Förderpumpe (3a, 3b) mit der Förderleitung (4a, 4b) und dem Auslauf (8) verbunden ist, derart, dass Flüssigkeit über die Förderleitung zu der Förderpumpe ansaugbar ist und von der Förderpumpe über die Auslaufleitung (8a) zu dem Auslauf (8) förderbar ist,
wobei die Steuereinheit mit der Förderpumpe (3a, 3b) zusammenwirkend ausgestaltet ist, derart, dass die Steuereinheit den Betriebszustand der Förderpumpe mittels Steuersignalen steuert,
**dadurch gekennzeichnet,**
**dass** die Vorrichtung eine Frischwasserzufuhrleitung (9) mit einem Frischwasserabsperrventil (10) umfasst, wobei die Frischwasserzufuhrleitung (9) in einem Frischwasserauslauf mündet welcher mit einer Ausgabekammer (13) eines Reinigungsmoduls verbindbar ist und
das Frischwasserabsperrventil (10) derart mit der Steuereinheit zusammenwirkend ausgestaltet ist, dass abhängig von Steuersignalen der Steuereinheit die Frischwasserzufuhr zu- und abschaltbar ist.

11. Vorrichtung nach mindestens einem der Ansprüche 8 bis 10,
**dadurch gekennzeichnet,**
**dass** die Vorrichtung eine Kühlkammer umfasst, zur Aufnahme von Behältern mit flüssigen Lebensmitteln oder Lebensmittelzusätzen,
wobei die Förderleitung (4a, 4b) in der Kühlkammer mündet, so dass Flüssigkeit aus der Kühlkammer mittels der Förderpumpe (3a, 3b) über die Förderleitung förderbar ist und
**dass** die Vorrichtung ein Reinigungsmodul gemäß mindestens einem der Ansprüche 1 bis 12 umfasst,
wobei Reinigungsmodul und Kühlkammer derart ausgeführt sind, dass das Reinigungsmodul in die Kühlkammer einschiebbar ist.

12. Vorrichtung nach den Ansprüchen 10, 11 und mindestens einem der Ansprüche 5 bis 8,
**dadurch gekennzeichnet,**
**dass** die Frischwasserzufuhrleitung (9) in der Kühlkammer mündet und dass der Frischwassereinlass des Reinigungsmoduls und die Mündung der Frischwasserzufuhrleitung (9) derart angeordnet sind, dass bei in die Kühlkammer eingeschobenem Reinigungsmodul die Mündung der Frischwasserzufuhrleitung (9) über dem Frischwassereinlass des Reinigungsmoduls liegt.

13. Verfahren zur Reinigung einer Vorrichtung zur Herstellung von flüssigen Lebensmitteln, insbesondere von Kaffee, folgende Schritte umfassend:
A Zuführen von Reinigungsmittel aus einem Reinigungsmittelbehälter mittels einer Dosiervorrichtung (14) in eine Ausgabekammer (13)
B Fördern des Reinigungsmittels aus der Ausgabekammer (13) mittels einer Förderpumpe (3) und Reinigen einer Auslaufleitung (8a) und eines Auslaufs der Vorrichtung mittels des Reinigungsmittels
C Zuführen von Frischwasser in die Ausgabekammer (13)
D Fördern des Frischwassers aus der Ausgabekammer (13) mittels der Förderpumpe (3) und Spülen der Auslaufleitung (8a) und des Auslaufs der Vorrichtung mittels des Frischwassers,
wobei die Zuführung von Reinigungsmittel und Frischwasser in die Ausgabekammer (13) automatisch geschieht und mittels einer Steuervorrichtung der Vorrichtung gesteuert wird,
dadurch gekennzeichent,
dass vor Vefahrensschritt A benutzerseitig
- ein Reinigungsmodul gemäß einem der vorangegangenen Ansprüche in oder an der Vorrichtung angeordnet wird,
- eine mit der Förderpumpe fluidleitend verbundene Leitung in die Ausgabekammer eingeführt wird und
- ein Steueranschluss der Vorrichtung mit einem Steueranschluss des Reinigungsmoduls verbunden wird.

14. Verfahren nach Anspruch 13,
**dadurch gekennzeichnet,**
**dass** in Schritt A zusätzlich Frischwasser in die Ausgabekammer (13) zugeführt wird, so dass in der Ausgabekammer (13) ein Gemisch von Reinigungsmittel und Frischwasser vorliegt, wobei das Mischverhältnis über die Steuereinheit vorgegeben wird und
**dass** in Schritt B anstelle des Reinigungsmittels das Gemisch von Frischwasser und Reinigungsmittel zum Reinigen verwendet wird.

15. Verfahren nach mindestens einem der Ansprüche 13 bis 14,
**dadurch gekennzeichnet,**
**dass** zwischen Schritt B und Schritt C folgende Schritte ausgeführt werden:
B.1 Zuführen eines zweiten Reinigungsmittels aus einem zweiten Reinigungsmittelbehälter mittels der Dosiervorrichtung (14) in die Ausgabekammer (13) und
B.2 Fördern des zweiten Reinigungsmittels aus der Ausgabekammer (13) mittels der Förderpumpe (3) und Reinigen der Auslaufleitung (8a) und des Auslaufs der Vorrichtung mittels des zweiten Reinigungsmittels,
insbesondere, dass in Schritt B.1 zusätzlich Frischwasser in die Ausgabekammer (13) zugeführt wird, so dass in der Ausgabekammer (13) ein Gemisch von zweitem Reinigungsmittel und Frischwasser vorliegt, wobei das Mischverhältnis über die Steuereinheit vorgegeben wird und dass in Schritt B.2 anstelle des zweiten Reinigungsmittels das Gemisch von Frischwasser und zweitem Reinigungsmittel zum Reinigen verwendet wird.

16. Verfahren nach mindestens einem der Ansprüche 13 bis 15,
**dadurch gekennzeichnet,**
**dass** das gesamte Reinigungsverfahren mehrmals durchlaufen wird, wobei in einem Durchlauf Auslaufleitung (8a) und Auslauf (8) der Vorrichtung gereinigt und gespült werden und in einem weiteren Durchlauf die Förderpumpe mit einer Brüheinheit (6) der Vorrichtung verbunden wird, so dass die Brüheinheit (6) gereinigt und gespült wird, insbesondere, dass in einem weiteren Durchlauf die Förderpumpe (3) mit einem Instantmischer (7) der Vorrichtung verbunden wird, so dass der Instantmischer (7) gereinigt und gespült wird.

## Claims

1. Cleaning module for machines for the production of liquid foodstuffs, especially for coffee machines,
comprising at least one cleaning agent container (12a, 12b, 12c) for receiving cleaning agent, at least one dosing device (14) having a control connection, and at least one dispensing chamber (13), wherein the dosing device (14) is connected to the cleaning agent container (12a, 12b, 12c) and to the dispensing chamber (13) in such a way that, by means of the dosing device (14), cleaning agent can be fed from the cleaning agent container to the dispensing chamber (13), **characterised in that**
the cleaning agent container(s) (12a, 12b, 12c), dosing device (14) and dispensing chamber (13) form a structural unit such that, for cleaning, the cleaning module can be arranged by or in the machine by the user;
the dispensing chamber (13) has an opening for introducing a feed line (4a, 4b);
the dosing device (14) has an electrical control and power supply connection which is in electrically conductive connection with at least one dosing pump (15a, 15b, 15c) and/or a multi-port valve of the dosing device (14),
the control connection being connectible by the user to a control connection of a machine for the production of liquid foodstuffs.

2. Cleaning module according to claim 1,
**characterised in that**
the cleaning agent container(s) (12a, 12b, 12c), dosing device (14) and dispensing chamber (13) are arranged in a common housing; preferably, the housing has a carrying handle arranged on the upper side; furthermore, preferably, the cleaning module is in the form of a push-in module (11); especially, at least one handle for pushing in and pulling out the cleaning module is formed on the cleaning module on a front side thereof.

3. Cleaning module according to either one of the preceding claims, **characterised in that**
the cleaning module additionally comprises at least one second cleaning agent container (12b) which is connected to the dosing device (14) and to the dispensing chamber (13) in such a way that, by means of the dosing device (14), cleaning agent can be fed from the second cleaning agent container (12b) to the dispensing chamber (13); and the dosing device (14) is constructed in such a way that, as desired, cleaning agent can be fed from the first and/or the second cleaning agent container(s) (12a, 12b) to the dispensing chamber (13); especially, the dosing device comprises a dosing pump and a multi-port valve, the multi-port valve being connected to each of the cleaning agent containers and to the dosing pump in such a way that, by means of the multi-port valve, the dosing pump is connectible, as desired, to the first or to the second cleaning agent container; furthermore, preferably, the dosing device (14) comprises at least two dosing pumps (15a, 15b), a first dosing pump (15a) being in fluid-conducting connection with the first cleaning agent container (12a) and with the dispensing chamber (13) and a second dosing pump (15b) being in fluid-conducting connection with the second cleaning agent container (12b) and with the dispensing chamber (13).

4. Cleaning module according to at least one of the preceding claims, **characterised in that**
the control connection and/or the power supply connection is/are in the form of a wirelessly connectible, inductive connection.

5. Cleaning module according to at least one of the preceding claims, **characterised in that**
the cleaning module has a fresh water inlet which is in conducting connection with the dispensing chamber (13); especially, the fresh water inlet is in the form of an opening in an upper side of the dispensing chamber (13).

6. Cleaning module according to at least one of the preceding claims, **characterised in that**
the opening is provided in an upper side of the dispensing chamber (13).

7. Cleaning module according to at least one of the preceding claims, **characterised in that**
the cleaning agent container (12a, 12b, 12c) is constructed so as to be suitable for receiving liquid cleaning agents; especially, the cleaning module has three cleaning agent containers (12a, 12b, 12c) for receiving liquid cleaning agents, the containers each being connected to the dispensing chamber (13) *via* the dosing device (14).

8. Device for the production of liquid foodstuffs, especially coffee, comprising at least one feed line (4a, 4b) and an outlet line (8a), a feed pump (3a, 3b), an outlet (8) and a control unit,
wherein the feed pump (3a, 3b) is connected to the feed line (4a, 4b) and to the outlet (8) in such a way that liquid can be drawn via the feed line into the feed pump and can be fed by the feed pump *via* the outlet line (8a) to the outlet (8),
wherein the control unit is arranged to co-operate with the feed pump (3a, 3b) in such a way that the control unit controls the operating state of the feed pump by means of control signals,
**characterised in that**
the device has a control connection for connecting a dosing device (14), and the control device is arranged to co-operate with the control connection and with the feed pump (3a, 3b) in such a way that, in a cleaning mode, the operating states of the feed pump and of a dosing device (14) connected to the control connection are controllable in dependence upon control signals of the control unit; the device comprises a multi-port valve (5) which is arranged in the outlet line (8a), the multi-port valve (5) being arranged to co-operate with the control unit in such a way that, in dependence upon control signals of the control unit, as desired the feed pump (3) can, by means of the multi-port valve, be brought into fluid-conducting connection with the outlet (8) via the outlet line (8a) or with at least one further component of the device via a rinsing line; preferably, the device comprises a brewing unit (6) for the production of coffee and a brewing unit rinsing line, the multi-port valve (5) being arranged in such a way that, in dependence upon control signals of the control unit, as desired the feed pump (3a, 3b) can, by means of the multi-port valve (5), be brought into fluid-conducting connection with the brewing unit (6) via the brewing unit rinsing line.

9. Device according to claim 8,
**characterised in that**
the device comprises an instant mixer (7) and an instant mixer rinsing line, the multi-port valve (5) being arranged in such a way that, in dependence upon control signals of the control unit, as desired the feed pump (3a, 3b) can, by means of the multi-port valve, be brought into fluid-conducting connection with the instant mixer (7) *via* the instant mixer rinsing line.

10. Device according to at least one of claims 8 and 9,
comprising at least one feed line (4a, 4b) and an outlet line (8a), a feed pump (3a, 3b), an outlet (8) and a control unit,
wherein the feed pump (3a, 3b) is connected to the feed line (4a, 4b) and to the outlet (8) in such a way that liquid can be drawn via the feed line into the feed pump and can be fed by the feed pump *via* the outlet line (8a) to the outlet (8),
wherein the control unit is arranged to co-operate with the feed pump (3a, 3b) in such a way that the control unit controls the operating state of the feed pump by means of control signals,
**characterised in that**
the device comprises a fresh water supply line (9) having a fresh water shut-off valve (10), the fresh water supply line (9) ending in a fresh water outlet which is connectible to a dispensing chamber (13) of a cleaning module, and
the fresh water shut-off valve (10) is arranged to co-operate with the control unit in such a way that the fresh water supply can be switched on and off in dependence upon control signals of the control unit.

11. Device according to at least one of claims 8 to 10,
**characterised in that**
the device comprises a cooling chamber for receiving containers having liquid foodstuffs or foodstuff additives,
wherein the feed line (4a, 4b) opens into the cooling chamber so that, by means of the feed pump (3a, 3b), liquid can be conveyed out of the cooling chamber via the feed line; and
the device comprises a cleaning module according to at least one of claims 1 to 12,
wherein the cleaning module and the cooling chamber are constructed in such a way that the cleaning module can be pushed into the cooling chamber:

12. Device according to claims 10, 11 and at least one of claims 5 to 8, **characterised in that**
the fresh water supply line (9) opens into the cooling chamber; and the fresh water inlet of the cleaning module and the mouth of the fresh water supply line (9) are arranged in such a way that when the cleaning module has been pushed into the cooling chamber the mouth of the fresh water supply line (9) is located above the fresh water inlet of the cleaning module.

13. Method of cleaning a device for the production of liquid foodstuffs, especially coffee, comprising the following steps:
A supplying cleaning agent from a cleaning agent container by means of a dosing device (14) to a dispensing chamber (13),
B conveying the cleaning agent out of the dispensing chamber (13) by means of a feed pump (3) and cleaning an outlet line (8a) and an outlet of the device by means of the cleaning agent,
C supplying fresh water to the dispensing chamber (13),
D conveying the fresh water out of the dispensing chamber (13) by means of the feed pump (3) and rinsing the outlet line (8a) and the outlet of the device by means of the fresh water,
wherein the supplying of cleaning agent and fresh water to the dispensing chamber (13) takes place automatically and is controlled by means of a control device of the device,
**characterised in that**,
prior to process step A, the user
- arranges a cleaning module according to any one of the preceding claims in or by the device,
- introduces a line that is in fluid-conducting connection with the feed pump into the dispensing chamber, and
- connects a control connection of the device to a control connection of the cleaning module.

14. Method according to claim 13,
**characterised in that**
in step A, in addition, fresh water is supplied to the dispensing chamber (13), so that a mixture of cleaning agent and fresh water is present in the dispensing chamber (13), the mixing ratio being preset *via* the control unit; and
in step B, instead of the cleaning agent, the mixture of fresh water and cleaning agent is used for cleaning.

15. Method according to at least one of claims 13 and 14,
**characterised in that**
between step B and step C the following steps are performed:
B.1 supplying a second cleaning agent from a second cleaning agent container to the dispensing chamber (13) by means of the dosing device (14), and
B.2 conveying the second cleaning agent out of the dispensing chamber (13) by means of the feed pump (3) and cleaning the outlet line (8a) and the outlet of the device by means of the second cleaning agent;
especially, in step B.1, in addition, fresh water is supplied to the dispensing chamber (13), so that a mixture of second cleaning agent and fresh water is present in the dispensing chamber (13), the mixing ratio being preset via the control unit; and
in step B.2, instead of the second cleaning agent, the mixture of fresh water and second cleaning agent is used for cleaning.

16. Method according to at least one of claims 13 to 15,
**characterised in that**
the entire cleaning method is run a number of times, wherein in one run the outlet line (8a) and the outlet (8) of the device are cleaned and rinsed, and in a further run the feed pump is connected to a brewing unit (6) of the device, so that the brewing unit (6) is cleaned and rinsed; especially, in a further run the feed pump (3) is connected to an instant mixer (7) of the device, so that the instant mixer (7) is cleaned and rinsed.

## Revendications

1. Module de nettoyage pour machines destinées à la fabrication d'aliments liquides, en particulier pour machines à café,
comprenant au moins un récipient de produit de nettoyage (12a, 12b, 12c) destiné à recevoir un produit de nettoyage, au moins un dispositif de dosage (14) avec un raccord de commande et au moins une chambre de distribution (13),
le dispositif de dosage (14) étant relié au récipient de produit de nettoyage (12a, 12b, 12c) et à la chambre de distribution (13) de telle façon que du produit de nettoyage puisse être transporté du récipient de produit de nettoyage dans la chambre de distribution (13) au moyen du dispositif de dosage (14),
**caractérisé en ce**
**que** le récipient de produit de nettoyage (12a, 12b, 12c), le dispositif de dosage (14) et la chambre de distribution (13) forment une unité constructive, de telle façon que le module de nettoyage puisse être disposé sur ou dans la machine du côté utilisateur,
**que** la chambre de distribution (13) présente une ouverture permettant l'introduction d'une conduite de transfert (4a, 4b),
**que** le dispositif de dosage (14) présente un raccord de commande et d'alimentation électrique qui est relié d'une manière conductrice de l'électricité à au moins une pompe de dosage (15a, 15b, 15c) et/ou à un distributeur à plusieurs voies du dispositif de dosage (14),
le raccord de commande pouvant être relié côté utilisateur à un raccord de commande d'une machine destinée à la fabrication d'aliments liquides.

2. Module de nettoyage selon la revendication 1,
**caractérisé en ce**
**que** le récipient de produit de nettoyage (12a, 12b, 12c), le dispositif de dosage (14) et la chambre de distribution (13) sont disposés dans un boîtier commun, de préférence que le boîtier présente une poignée de transport disposée sur la face supérieure, également de préférence que le module de nettoyage est réalisé sous la forme d'un module insérable (11), en particulier qu'au moins une poignée pour insérer et extraire le module de nettoyage est formée sur une face avant du module de nettoyage.

3. Module de nettoyage selon une des revendications précédentes,
**caractérisé en ce**
**que** le module de nettoyage comprend en outre au moins un deuxième récipient de produit de nettoyage (12b), lequel est relié au dispositif de dosage (14) et à la chambre de distribution (13) de telle façon que du produit de nettoyage puisse être transporté du deuxième récipient de produit de nettoyage (12b) dans la chambre de distribution (13) au moyen du dispositif de dosage (14) et que le dispositif de dosage (14) est réalisé de telle façon qu'il soit possible de transporter au choix du produit de nettoyage du premier et/ou du deuxième récipient de produit de nettoyage (12a, 12b) dans la chambre de distribution (13), en particulier que le dispositif de dosage comprend une pompe de dosage et un distributeur à plusieurs voies, le distributeur à plusieurs voies étant relié à chacun des récipients de produit de nettoyage et à la pompe de dosage de telle façon que la pompe de dosage puisse être reliée au choix au premier ou au deuxième récipient de produit de nettoyage au moyen du distributeur à plusieurs voies, également de préférence que le dispositif de dosage (14) comprend au moins deux pompes de dosage (15a, 15b), une première pompe de dosage (15a) étant reliée d'une manière conductrice de fluide au premier récipient de produit de nettoyage (12a) et à la chambre de distribution (13) et une deuxième pompe de dosage (15b) au deuxième récipient de produit de nettoyage (12b) et à la chambre de distribution (13).

4. Module de nettoyage selon au moins une des revendications précédentes, **caractérisé en ce**
**que** le raccord de commande et/ou le raccord d'alimentation électrique est réalisé sous la forme d'un raccord inductif pouvant être relié sans câble.

5. Module de nettoyage selon au moins une des revendications précédentes, **caractérisé en ce**
**que** le module de nettoyage présente une entrée d'eau fraîche qui est reliée d'une manière conductrice à la chambre de distribution (13), en particulier que l'entrée d'eau fraîche est réalisée sous la forme d'une ouverture dans une face supérieure de la chambre de distribution (13).

6. Module de nettoyage selon au moins une des revendications précédentes, **caractérisé en ce**
**que** l'ouverture est réalisée dans une face supérieure de la chambre de distribution (13).

7. Module de nettoyage selon au moins une des revendications précédentes, **caractérisé en ce**
**que** le récipient de produit de nettoyage (12a, 12b, 12c) est réalisé de manière appropriée pour recevoir des produits de nettoyage liquides, en particulier que le module de nettoyage présente trois récipients de produit de nettoyage (12a, 12b, 12c) pour recevoir des produits de nettoyage liquides, lesquels sont reliés chacun à la chambre de distribution (13) par l'intermédiaire du dispositif de dosage (14).

8. Dispositif destiné à la fabrication d'aliments liquides, en particulier de café, comprenant au moins une conduite de transfert (4a, 4b) et une conduite de sortie (8a), une pompe de transfert (3a, 3b), une sortie (8) et une unité de commande, la pompe de transfert (3a, 3b) étant reliée à la conduite de transfert (4a, 4b) et à la sortie (8) de telle façon que du liquide puisse être aspiré par la conduite de transfert vers la pompe de transfert et transporté par la pompe de transfert vers la sortie (8) via la conduite de sortie (8a),
l'unité de commande étant conçue pour coopérer avec la pompe de transfert (3a, 3b) de telle façon que l'unité de commande commande l'état de fonctionnement de la pompe de transfert au moyen de signaux de commande,
**caractérisé en ce**
**que** le dispositif présente un raccord de commande pour raccorder un dispositif de dosage (14) et le dispositif de commande est conçu pour coopérer avec le raccord de commande et la pompe de transfert (3a, 3b) de telle façon que, dans un mode de nettoyage dépendant de signaux de commande de l'unité de commande, les états de fonctionnement de la pompe de transfert et d'un dispositif de dosage (14) raccordé au raccord de commande puissent être commandés, que le dispositif comprend un distributeur à plusieurs voies (5), lequel est disposé dans la conduite de sortie (8a), le distributeur à plusieurs voies (5) étant conçu pour coopérer avec l'unité de commande de telle façon que la pompe de transfert (3) puisse être reliée d'une manière conductrice de fluide, au moyen du distributeur à plusieurs voies, au choix à la sortie (8) via la conduite de sortie (8a) ou à au moins un autre composant du dispositif via une conduite de rinçage en fonction de signaux de commande de l'unité de commande, de préférence que le dispositif comprend une unité de percolation (6) pour la fabrication de café et une conduite de rinçage d'unité de percolation, le distributeur à plusieurs voies (5) étant conçu de telle façon que la pompe de transfert (3a, 3b) puisse être reliée d'une manière conductrice de fluide, au moyen du distributeur à plusieurs voies (5), au choix à l'unité de percolation (6) via la conduite de rinçage d'unité de percolation en fonction de signaux de commande de l'unité de commande.

9. Dispositif selon la revendication 8,
**caractérisé en ce**
**que** le dispositif comprend un mélangeur instantané (7) et une conduite de rinçage de mélangeur instantané, le distributeur à plusieurs voies (5) étant conçu de telle façon que la pompe de transfert (3a, 3b) puisse être reliée d'une manière conductrice de fluide, au moyen du distributeur à plusieurs voies, au choix au mélangeur instantané (7) via la conduite de rinçage de mélangeur instantané en fonction de signaux de commande de l'unité de commande.

10. Dispositif selon au moins une des revendications 8 à 9,
comprenant au moins une conduite de transfert (4a, 4b) et une conduite de sortie (8a), une pompe de transfert (3a, 3b), une sortie (8) et une unité de commande, là pompe de transfert (3a, 3b) étant reliée à la conduite de transfert (4a, 4b) et à la sortie (8) de telle façon que du liquide puisse être aspiré par la conduite de transfert vers la pompe de transfert et transporté de la pompe de transfert vers la sortie (8) via la conduite de sortie (8a),
l'unité de commande étant conçue pour coopérer avec la pompe de transfert (3a, 3b) de telle façon que l'unité de commande commande l'état de fonctionnement de la pompe de transfert au moyen de signaux de commande,
**caractérisé en ce**
**que** le dispositif comprend une conduite d'arrivée d'eau fraîche (9) avec un robinet d'arrêt d'eau fraîche (10), la conduite d'arrivée d'eau fraîche (9) débouchant dans une sortie d'eau fraîche qui peut être reliée à une chambre de distribution (13) d'un module de nettoyage et le robinet d'arrêt d'eau fraîche (10) étant conçu pour coopérer avec l'unité de commande de telle façon que l'arrivée d'eau fraîche puisse être ouverte et fermée en fonction de signaux de commande de l'unité de commande.

11. Dispositif selon au moins une des revendications 8 à 10,
**caractérisé en ce**
**que** le dispositif comprend une chambre de refroidissement destinée à recevoir des récipients contenant des aliments liquides ou des additifs alimentaires,
la conduite de transfert (4a, 4b) débouchant dans la chambre de refroidissement, de sorte que du liquide peut être transporté de la chambre de refroidissement via la conduite de transfert au moyen de la pompe de transfert (3a, 3b) et
**que** le dispositif comprend un module de nettoyage selon au moins une des revendications 1 à 12,
le module de nettoyage et la chambre de refroidissement étant réalisés de telle façon que le module de nettoyage puisse être inséré dans la chambre de refroidissement.

12. Dispositif selon les revendications 10, 11 et au moins une des revendications 5 à 8, **caractérisé en ce**
**que** la conduite d'arrivée d'eau fraîche (9) débouche dans la chambre de refroidissement et
**que** l'entrée d'eau fraîche du module de nettoyage et l'embouchure de la conduite d'arrivée d'eau fraîche (9) sont disposées de telle façon que lorsque le module de nettoyage est inséré dans la chambre de refroidissement, l'embouchure de la conduite d'arrivée d'eau fraîche (9) se situe au-dessus de l'entrée d'eau fraîche du module de nettoyage.

13. Procédé de nettoyage d'un dispositif destiné à la fabrication d'aliments liquides, en particulier de café, comprenant les étapes suivantes :
A amenée d'un produit de nettoyage depuis un récipient de produit de nettoyage dans une chambre de distribution (13) au moyen d'un dispositif de dosage (14)
B transport du produit de nettoyage depuis la chambre de distribution (13) au moyen d'une pompe de transfert (3) et nettoyage d'une conduite de sortie (8a) et d'une sortie du dispositif au moyen du produit de nettoyage
C amenée d'eau fraîche dans la chambre de distribution (13)
D transport de l'eau fraîche depuis la chambre de distribution (13) au moyen de la pompe de transfert (3) et rinçage de la conduite de sortie (8a) et de la sortie du dispositif au moyen de l'eau fraîche,
l'amenée de produit de nettoyage et d'eau fraîche dans la chambre de distribution (13) ayant lieu automatiquement et étant commandée au moyen d'un dispositif de commande du dispositif,
**caractérisé en ce**
**qu'**avant l'étape de procédé A, du côté utilisateur,
- un module de nettoyage selon une des revendications précédentes est disposé dans ou sur le dispositif,
- une conduite reliée d'une manière conductrice de fluide à la pompe de transfert est introduite dans la chambre de distribution et
- un raccord de commande du dispositif est relié à un raccord de commande du module de nettoyage.

14. Procédé selon la revendication 13,
**caractérisé en ce**
**qu'**à l'étape A, de l'eau fraîche est amenée en plus dans la chambre de distribution (13), de sorte qu'il existe un mélange de produit de nettoyage et d'eau fraîche dans la chambre de distribution (13), le rapport de mélange étant prescrit par l'unité de commande et
**qu'**à l'étape B, on utilise le mélange d'eau fraîche et de produit de nettoyage pour le nettoyage à la place du produit de nettoyage.

15. Procédé selon au moins une des revendications 13 à 14,
**caractérisé en ce**
**que** les étapes suivantes sont exécutées entre l'étape B et l'étape C :
B.1 amenée d'un deuxième produit de nettoyage depuis un deuxième récipient de produit de nettoyage dans la chambre de distribution (13) au moyen du dispositif de dosage (14) et
B.2 transport du deuxième produit de nettoyage depuis la chambre de distribution (13) au moyen de la pompe de transfert (3) et nettoyage de la conduite de sortie (8a) et de la sortie du dispositif au moyen du deuxième produit de nettoyage,
en particulier qu'à l'étape B.1, de l'eau fraîche est amenée en plus dans la chambre de distribution (13), de sorte qu'il existe dans la chambre de distribution (13) un mélange de deuxième produit de nettoyage et d'eau fraîche, le rapport de mélange étant prescrit par l'unité de commande, et qu'à l'étape B.2, on utilise le mélange d'eau fraîche et de deuxième produit de nettoyage pour le nettoyage à la place du deuxième produit de nettoyage.

16. Procédé selon au moins une des revendications 13 à 15,
**caractérisé en ce**
**que** l'ensemble du procédé de nettoyage est effectué en plusieurs passages, la conduite de sortie (8a) et la sortie (8) du dispositif étant nettoyées et rincées dans un passage et, dans un passage suivant, la pompe de transfert est reliée à une unité de percolation (6) du dispositif, de sorte que l'unité de percolation (6) est nettoyée et rincée, en particulier que, dans un passage suivant, la pompe de transfert (3) est reliée à un mélangeur instantané (7) du dispositif, de sorte que le mélangeur instantané (7) est nettoyé et rincé.
